# EUROPÄISCHE PATENTANMELDUNG

(11) **EP 4 714 662 A1**
(43) Veröffentlichungstag der Anmeldung: **25.03.2026**
(21) Anmeldenummer: 25198709.5
(22) Anmeldetag: 28.08.2025
(51) Int. Cl.: B41J 3/407, B41J 2/44

(54) **VORRICHTUNG UND VERFAHREN ZUM MARKIEREN VON BEHÄLTERN, MASCHINE ZUR LASERCODIERUNG UND ANLAGE ZUM HERSTELLEN UND/ODER BEHANDELN VON BEHÄLTERN**

(30) Priorität: 17.09.2024 DE 102024126815
(71) Anmelder: KHS GmbH, 44143 Dortmund (DE)
(72) Erfinder: Jacobsen, Alexander, 44143 Dortmund (DE); Klatt, Dieter, 44143 Dortmund (DE); Polzin, Christian, 44143 Dortmund (DE); Reimer, Dirk, 44143 Dortmund (DE)

(57) **Zusammenfassung**

Die Erfindung betrifft eine Vorrichtung (10) zum Markieren von Behältern (12) bei einem Transport entlang eines Transportpfads mittels eines Laserstrahls (26), wobei die Vorrichtung (10) mindestens eine Transporteinrichtung (14) zum Transportieren des mindestens einen Behälters (12) entlang des Transportpfads in einer Transportrichtung (17), eine Antriebseinrichtung (42) zum Drehen des mindestens einen Behälters (12) um eine sich durch den mindestens einen Behälter erstreckenden Behälterachse (40), und mindestens eine Lasereinrichtung (24) zum Erzeugen mindestens eines den Transportpfad kreuzenden Laserstrahls (26) zum Markieren des mindestens einen entlang des Transportpfads transportierten Behälters (12) aufweist, wobei die Antriebseinrichtung (42) auf zumindest einem sich an der Lasereinrichtung (24) vorbei erstreckenden Pfadabschnitt (19) des Transportpfades derart zum Drehen des mindestens einen Behälters (12) um die Behälterachse (40) ausgebildet ist, dass mindestens ein zur Lasereinrichtung (24) weisender Oberflächenabschnitt (28) des mindestens einen Behälters (12) während des Transports des mindestens einen Behälters (12) entlang des Pfadabschnitts (19) eine Bewegungsrichtung (18) entgegen der Transportrichtung (17) aufweist. Damit stellt die Erfindung eine Vorrichtung (10) zum Markieren von Behältern (12) bereit, die großflächige Lasercodierungen mit einer verbesserten Codiereffizienz aufweist.

## Beschreibung

Die Erfindung betrifft eine Vorrichtung und ein Verfahren zum Markieren von Behältern, eine Maschine zur Lasercodierung und eine Anlage zum Herstellen und/oder Behandeln von Behältern.

Beim Behandeln von Behältern, insbesondere von Flaschen, können diese mit einem Etikett mit Informationen bezüglich der Flaschenfüllung versehen werden, wobei die Informationen beispielsweise die Inhaltsmenge und -stoffe, Nährwertangaben, das Mindesthaltbarkeitsdatum oder auch Angaben hinsichtlich des Herstellers oder des Abfüllortes umfassen können. Beim Etikettieren können die Behälter entlang eines Transportpfads in Bogenform geführt werden und, insbesondere bei der Rundumetikettierung, gleichsinnig zu einer Drehbewegung, die durch die Bogenform des Transportpfads bedingt wird, um die Behälterachse gedreht werden. Dies kann das Abrollen und Anbringen des Etiketts beschleunigen und vereinfachen.

Weiter ist bekannt, insbesondere Mehrwegbehälter mit einer Markierung direkt am Behälterkörper zu versehen, die dann unter anderem Rückschlüsse auf das Gebrauchsalter und/oder verwendete Produktionsmittel der Flasche zulässt. Markierungen direkt am Behälterkörper können mittels einer Lasereinrichtung in die Außenwand des Behälters eingebracht werden, was als Lasercodierung bezeichnet werden kann. Dafür wird ein Laserstrahl mit definierter Wellenlänge über die Oberfläche des Behälters geführt und ein Zahlen-, Symbol-, Strich- oder sonstiger Code eingebrannt.

Solche Lasercodierungen finden häufig im Bereich einer Etikettiermaschine statt, wo die Flaschen zwar trocken, aber offen sind. Da beim Einbrennen allerdings feine Staubpartikel entstehen, können die Behälter kontaminiert werden und somit kann nur ein begrenzter, unbedenklicher Bereich eines Behälters markiert werden. Lasercodierungen können auch nach dem Befüllen und Verschließen der Behälter durchgeführt werden. Da beim Befüllen geringe Mengen des Füllguts die äußere Oberfläche der Behälter benetzen können, müssen die Behälter vor der Lasercodierung gereinigt und getrocknet werden. Nach der Reinigung wird für die eigentliche Lasercodierung eine zusätzliche Einhausung benötigt, um einerseits die Behälter sauber und trocken zu halten und andererseits die Umgebung vor der Laserstrahlung zu schützen.

Weiterhin kann die Lasercodierung im unbewegten Zustand stattfinden, sodass eine Transporteinrichtung in der Etikettiermaschine, um somit auch die vorherigen und anschließenden Schritte der Etikettierung, oder eine Transporteinrichtung nach der Befüllung wiederholend erst gestoppt und anschließend hochgefahren werden. Dies lässt entweder insgesamt oder zumindest auf diesem Abschnitt einer Behälterbehandlungsanlage lediglich eine geringe Betriebsgeschwindigkeit zu.

Aus EP0539735 A1 ist bekannt, Gebinde während des Durchlaufs durch eine Inspektionsmaschine mittels eines Laserstrahls zu bearbeiten und/oder zu vermessen bzw. zu inspizieren. Dafür wird ein Laserstrahl über eine Anordnung von feststehend und/oder beweglich gelagerten Spiegeln geführt, sodass mindestens während eines Abschnitts eines Förderweges der Laserstrahl synchron mit dem Gebinde bewegt und dieses mit der Markierung beaufschlagt wird.

Aufgabe der Erfindung ist es, eine Vorrichtung und ein Verfahren zum Markieren von Behältern mittels einer Lasereinrichtung bereitzustellen, die Behälter effizient und großflächig markieren kann und kostengünstig betreibbar ist.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Gemäß einem ersten Aspekt wird eine Vorrichtung zum Markieren mindestens eines Behälters bei einem Transport entlang mindestens eines Transportpfads beschrieben, umfassend eine Transporteinrichtung zum Transportieren des mindestens einen Behälters entlang des Transportpfads in einer Transportrichtung, eine Antriebseinrichtung zum Drehen des mindestens einen Behälters um eine sich durch den mindestens einen Behälter erstreckenden Behälterachse, und mindestens eine Lasereinrichtung zum Erzeugen mindestens eines den Transportpfad kreuzenden Laserstrahls zum Markieren des mindestens einen entlang des Transportpfads transportierten Behälters, wobei erfindungsgemäß vorgesehen ist, dass die Antriebseinrichtung auf zumindest einem sich an der Lasereinrichtung vorbei erstreckenden Pfadabschnitt des Transportpfades derart zum Drehen des mindestens einen Behälters um die Behälterachse ausgebildet ist, dass mindestens ein zur Lasereinrichtung weisender Oberflächenabschnitt des mindestens einen Behälters während des Transports des mindestens einen Behälters entlang des Pfadabschnitts eine Bewegungsrichtung entgegen der Transportrichtung aufweist.

Mit der Vorrichtung werden mindestens eine Transport-, mindestens eine Antriebs- und mindestens eine Lasereinrichtung bereitgestellt, mit denen mindestens ein Behälter während des Transports direkt und großflächig markiert werden kann. Die Transporteinrichtung bewegt den mindestens einen Behälter entlang eines Transportpfades in eine Transportrichtung. Dabei kreuzt mindestens ein Laserstrahl der Lasereinrichtung einen Pfadabschnitt des Transportpfads. Die Lasereinrichtung erzeugt während des Transports des Behälters eine Markierung in einen äußeren zur Lasereinrichtung weisenden Oberflächenabschnitt des Behälters, beispielsweise durch Einbrennen und/oder durch eine Erhöhung der Kristallisation des Behältermaterials. Spätestens mit Beginn des Markierens wird der Behälter zusätzlich zur Transportbewegung entlang des Transportpfades derart durch die Antriebseinrichtung um seine Behälterachse gedreht, dass sich der zu der Lasereinrichtung weisende Oberflächenabschnitt entgegen der Transportrichtung um die Behälterachse bewegt. Die Relativgeschwindigkeit des Oberflächenabschnitts hinsichtlich der Lasereinrichtung wird damit verlangsamt. Der Oberflächenabschnitt kann damit zumindest während des Transports entlang des Pfadabschnitts durch Anpassung der Drehgeschwindigkeit der Antriebseinrichtung an die Transportgeschwindigkeit in Transportrichtung ständig zu der Lasereinrichtung orientiert werden. Dies kann in einigen Ausführungsbeispielen derart erfolgen, dass die Behälteroberfläche eine fiktive Abrollbewegung an der zur Lasereinrichtung weisenden Seite durchführt, wobei die Abrollbewegung weiter einen Schlupf aufweisen kann. Damit kann, anders als bei einer Markierung ohne Drehung des Behälters während des Transports oder mit Drehung des Oberflächenabschnitts um die Behälterachse in Transportrichtung wie beim Anbringen von Etiketten der zu markierende Oberflächenabschnitt des Behälters länger zu der Lasereinrichtung orientiert werden. Somit kann dieser Bereich des Behälters während des Transports effizient, mit hoher Qualität und/oder mit großer Fläche markiert werden.

Gemäß einigen Ausführungsbeispielen ist denkbar, dass der Laserstahl um eine Schwenkachse schwenkbar ausgebildet sein kann, wobei sich der Laserstrahl zu einem fest auf dem mindestens einen Behälter angeordnetem Oberflächenpunkt erstrecken kann und während des Transports und der Drehung des mindestens einen Behälters entlang des Pfadabschnitts einen gleichbleibenden Winkel mit mindestens einem den mindestens einen Oberflächenpunkt umgebenden Oberflächenabschnitt des mindestens einen Behälters einschließen kann.

Ein Laserstrahl, der schwenkbar ausgebildet ist, kann durch den Transport bedingten Bewegungen eines Behälters über einen verlängerten Zeitraum mit gleichbleibendem Winkel folgen und eine Markierung setzen. Durch den über einen verlängerten Zeitraum gleichbleibenden Winkel kann die Markierung präzise und größer als herkömmliche Codemarkierungen gesetzt werden.

Gemäß einigen Ausführungsbeispielen ist denkbar, dass die mindestens eine Lasereinrichtung beweglich gelagert sein kann, wobei sie vorzugsweise zwischen einer ersten Winkelstellung und einer zweiten Winkelstellung schwenkbar sein kann, wobei zwischen den beiden Winkelstellungen ein von der Lasereinrichtung erzeugter Laserstrahl den zumindest einen Pfadabschnitt überstreichen kann, und die Lasereinrichtung insbesondere mindestens einen Diodenlaser aufweisen kann.

Eine beweglich gelagerte Lasereinrichtung trägt dazu bei, dass trotz des Transports und somit trotz der Bewegung des zu markierenden Behälters, über einen verlängerten Zeitraum eine gleichbleibende Orientierung zwischen Behälteroberfläche und Lasereinrichtung gehalten werden kann. Weiter kann die Lasereinrichtung synchron zur Bewegung des Behälters geschwenkt oder bewegt werden, so dass große Lasercodierungen von hoher Qualität ermöglicht werden. Insbesondere Diodenlaser eignen sich für eine beweglich gelagerte Montage, da sie vergleichsweise leichte Laser sind.

Gemäß einigen Ausführungsbeispielen ist denkbar, dass die mindestens eine Lasereinrichtung stationär gelagert sein kann.

Durch die stationäre Lagerung können große und schwere Lasereinrichtungen mit entsprechend hoher Leistung verwendet werden. Weiter kann die Kalibrierung der Lasereinrichtung durch die stationäre Lagerung vereinfacht werden..

Gemäß einigen Ausführungsbeispielen ist denkbar, dass die Lasereinrichtung mindestens einen beweglich gelagerten Spiegel zum Umlenken des von der Lasereinrichtung erzeugten Laserstrahls in Richtung des mindestens einen Behälters aufweisen kann.

Damit kann ein mittels eines beispielsweise stationär gelagerten Lasers erzeugter Laserstrahl punktgenau ausgerichtet und zumindest während des Transports des Behälters entlang des Pfadabschnitts über eine sich bewegende Behälteroberfläche mitgeführt werden.

Somit sind auch mit einem stationär gelagerten Laser große Lasercodierungen von hoher Qualität möglich. Weiter wird durch die Verwendung der Spiegel eine hohe Flexibilität in der Auswahl an Lasern bereitgestellt, da auch Laser, die zu schwer und/oder zu groß für eine bewegliche Lagerung sind, in der Vorrichtung verwendet werden können.

Gemäß einigen Ausführungsbeispielen ist denkbar, dass der mindestens eine beweglich gelagerte Spiegel schwenkbar gelagert sein kann.

Durch einen schwenkbar gelagerten Spiegel kann ein mittels eines stationär gelagerten Lasers erzeugter Laserstrahl nicht nur auf einen zu markierenden Behälter umgelenkt werden, sondern entlang eines Pfadabschnitts des Transportpfads mitgeführt und/oder über eine Behälteroberfläche bewegt werden, beispielsweise zur Feinpositionierung und/oder zum Erzeugen größerer Markierungen.

Gemäß einigen Ausführungsbeispielen ist denkbar, dass die mindestens eine Lasereinrichtung zum Auftragen mindestens einer Markierung in Form mindestens eines Etiketts auf den mindestens einen Behälter ausgebildet sein kann.

Eine großflächige Markierung mittels des Lasers kann zusätzlich zur Codierung ein gesamtes Etikett umfassen, das als Laserlabel bezeichnet werden kann. Dies kann auch derart erfolgen, dass komplett auf Laserlabel umgerüstet und auf andere Etikettenformen verzichtet werden kann. Dabei kann die Lasereinrichtung die Etikettiereinrichtung innerhalb einer Etikettiermaschine ersetzen und als Markierung sowohl eine Codierung als auch ein Label anbringen. So können die Behälter im trockenen und geschlossenen Zustand codiert und/oder gelabelt werden, sodass eine Kontamination durch potenzielle Staubpartikel durch das Lasern vermieden werden kann. Das Ersetzen der Etikettiereinrichtung durch die Lasereinrichtung kann weiter ein kostengünstiges und unkompliziertes Umrüsten bereits vorhandener Vorrichtungen zur Markierung von Behältern erlauben. Weiter kann auf zusätzliche Einhausungen der Vorrichtung zur Lasercodierung verzichtet werden. Weiter kann auf Tintenkomponenten, beim Drucken mit Tinte, Tonerkomponenten, wie beim Laserdruck, und/oder Klebemittel sowie Papier-/Folienbahnen, wie beim Etikettieren, ressourcenschonend verzichtet werden. Laserlabel sind weiter nicht nur in wirtschaftlicher Hinsicht von Vorteil, sondern auch in ökologischer Hinsicht. Markierungen, die beispielsweise durch nur schwierig lösbare Tintenkomponenten oder Klebemittel aufgetragen werden, müssen vor der Wiederverwendung und/oder dem Recyclingprozess erst aufwendig gereinigt werden. Laserlabel hingegen sind für den Wiederverwendungs- und/oder Recyclingprozess unbedenklich, da die Markierungen direkt ins Behältermaterial eingebrannt werden. Durch den Verzicht auf beispielsweise Klebeetiketten verringert sich außerdem das Gesamtgewicht des Verpackungsmaterials, wodurch weniger Kraftstoff für den Versand benötigt wird.

Gemäß einigen Ausführungsbeispielen ist denkbar, dass der Transportpfad eine Bogenform, vorzugsweise eine Kreisbogenform, aufweisen kann, wobei eine Drehrichtung des mindestens einen Behälters um seine Behälterachse gegensinnig zu einer durch einen Transport entlang der Bogenform des Transportpfads erzeugten Drehung des mindestens einen Behälters um eine außerhalb des mindestens einen Behälters angeordnete Drehachse sein kann.

Ein Transportpfad in Bogen-, insbesondere Kreisbogenform, kann platzsparender in der Vorrichtung, Maschine und/oder Anlage eingebracht werden als geradlinige Transportpfade. Durch eine Drehung eines Behälters um seine Behälterachse gegensinnig zu der Drehung der Behälter, die durch den bogenförmigen Transportpfad bedingt wird, kann dennoch ein fixer Abschnitt der Behälteroberfläche gleichbleibend zur Lasereinrichtung orientiert bleiben.

Gemäß einigen Ausführungsbeispielen ist denkbar, dass die Vorrichtung eine Steuerung für die Antriebseinrichtung und die Lasereinrichtung umfassen kann, die zum Steuern der Flaschendrehung entgegen der Transportrichtung um ihre eigene Behälterachse derart eingerichtet sein kann, dass der mindestens eine Oberflächenabschnitt des mindestens einen Behälters während des Transports des mindestens einen Behälters entlang des Pfadabschnitts eine gleichbleibende Orientierung zu der mindestens einen Lasereinrichtung aufweisen kann. Gleichzeitig kann die Steuerung zum Steuern der mindestens einen Lasereinrichtung synchron zum Transport des mindestens einen Behälters eingerichtet sein.

Damit können sowohl die Drehung des Behälters und die Bewegung der Lasereinrichtung synchronisiert und zeitlich aufeinander abgestimmt werden, sodass die Verweildauer des von der Lasereinrichtung erzeugten Laserstrahls in gleichbleibendem Winkel zur Behälteroberfläche trotz Transports des Behälters entlang eines Pfadabschnitts des Transportpfads maximiert wird, um den Behälter mit einer möglichst großen Markierung zu beaufschlagen.

Gemäß einem zweiten Aspekt wird eine Maschine zur Lasercodierung mindestens eines Behälters beschrieben, umfassend mindestens eine Vorrichtung gemäß der vorangegangenen Beschreibung, wobei der Transportpfad sich durch die Maschine zur Lasercodierung erstreckt, und ein Gehäuse, das die Maschine zur Lasercodierung einhaust.

Vorteile und Wirkungen sowie Weiterbildungen der Maschine ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Gemäß einem dritten Aspekt wird eine Anlage zum Herstellen und/oder Behandeln von Behältern beschrieben, umfassend mindestens eine Maschine zum Herstellen und/oder Behandeln von Behältern, mindestens eine Vorrichtung gemäß der vorangegangenen Beschreibung und mindestens einen Transportpfad für Behälter und/oder mindestens eine Maschine zur Lasercodierung gemäß der vorangegangenen Beschreibung, wobei sich der Transportpfad zumindest zwischen der Maschine zum Herstellen und/oder Behandeln von Behältern und der Vorrichtung und/oder der mindestens einen Maschine zur Lasercodierung erstreckt.

Vorteile und Wirkungen sowie Weiterbildungen der Anlage ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Gemäß einem vierten Aspekt wird ein Verfahren zum Markieren mindestens eines zu markierenden Behälters bei einem Transport entlang mindestens eines Transportpfads beschrieben, umfassend mindestens die folgenden Schritte: Transportieren des mindestens einen Behälters entlang zumindest einem Pfadabschnitt des Transportpfads an einer Lasereinrichtung zur Erzeugung mindestens eines den Transportpfad kreuzenden Laserstrahls vorbei mittels einer Transporteinrichtung; Drehen des mindestens einen Behälters um die eigene Behälterachse während des Transportierens entlang des zumindest einen Pfadabschnitts mittels einer Antriebseinrichtung derart, dass mindestens ein zur Lasereinrichtung weisender Oberflächenabschnitt des mindestens einen Behälters während des Transports des mindestens einen Behälters entlang des Pfadabschnitts eine Bewegungsrichtung entgegen der Transportrichtung aufweist; und Markieren des mindestens einen Behälters mittels der mindestens einen Lasereinrichtung während des Transportierens entlang des zumindest einen Pfadabschnitts.

Vorteile und Wirkungen sowie Weiterbildungen des Verfahrens ergeben sich aus den Vorteilen und Wirkungen sowie Weiterbildungen der oben beschriebenen Vorrichtung, der oben beschriebenen Maschine und der oben beschriebenen Anlage. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1a-d: eine schematische Darstellung verschiedener Ausführungsbeispiele einer Vorrichtung zur Lasercodierung von Behältern;
- Figur 2a-c: schematische Darstellungen der Vorrichtung mit verschiedenen Positionen des zu markierenden Behälters;
- Figur 3 a, b: eine schematische Darstellung zweier weiterer Ausführungsbeispiele einer Vorrichtung;
- Figur 4: eine schematische Darstellung einer Anlage zum Herstellen und/oder Behandeln von Behältern; und
- Figur 5: ein Flussdiagramm des Verfahrens zum Markieren mindestens eines zu markierenden Behälters.

Die Vorrichtung wird im Folgenden in ihrer Gesamtheit mit dem Bezugszeichen 10 bezeichnet.

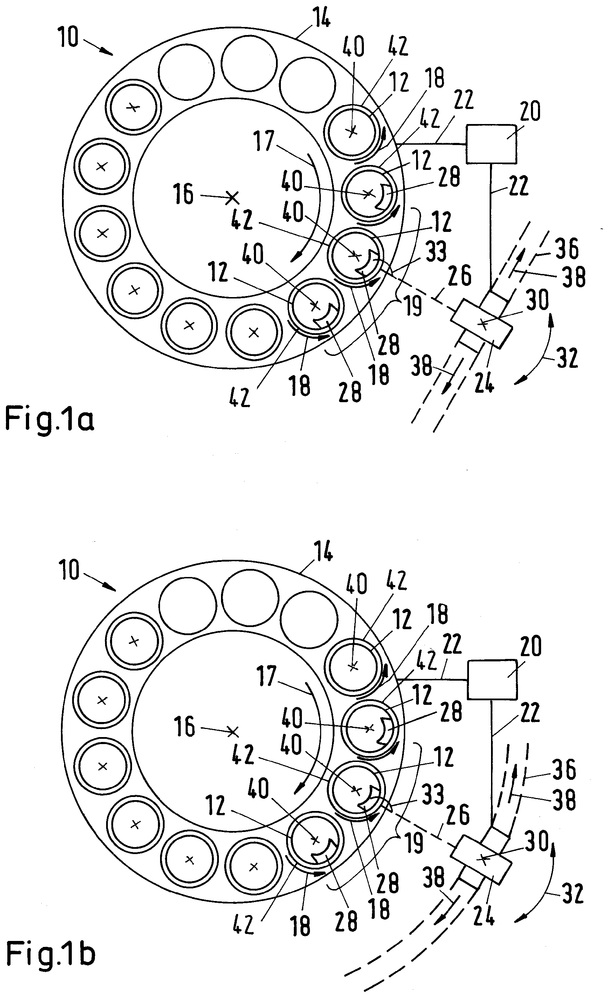

In einer Vorrichtung zur Lasercodierung 10 von Behältern 12 können gemäß Figur 1a bis 1c die Behälter 12 mittels einer Transporteinrichtung 14 entlang eines Pfadabschnitts 19 eines Transportpfads für die Behälter 12 an mindestens einer Lasereinrichtung 24 vorbeigeführt werden. Der Pfadabschnitt 19 des Transportpfads kann zumindest im Bereich entlang der Lasereinrichtung 24 bogenförmig ausgebildet sein, wobei auch eine geradlinige oder sonstige Führung denkbar ist. Die Behälter 12 können durch eine Antriebseinrichtung 42, vorzugsweise in Form von Drehtellern, zusätzlich zur Bewegung in Transportrichtung 17 entlang des Transportpfads gedreht werden, wobei die Antriebseinrichtung 42 vorzugsweise innerhalb der Transporteinrichtung 14, zum Beispiel unterhalb des Transportpfads, angeordnet sein kann. Jedoch seien damit andere Ausführungen zur Drehung der Behälter 12 nicht ausgeschlossen.

Werden die Behälter 12 mittels der Transporteinrichtung 14 entlang einer Lasereinrichtung 24 zur Erzeugung mindestens eines den Transportpfad kreuzenden Laserstrahls 26 vorbeigeführt, können die Behälter 12 um ihre Behälterachse 40 derart gedreht werden, dass mindestens ein zu der Lasereinrichtung 24 weisender Oberflächenabschnitt 28 der Behälter 12 entgegen der Transportrichtung 17 gedreht wird. Insbesondere bei einem bogenförmigen Pfadabschnitt 19 können sie in einer Drehrichtung entgegensinnig der Drehung und eine Transporteinrichtungsachse 16 gedreht werden, die durch den bogenförmigen Pfadabschnitt 19 bedingt wird. Der Oberflächenabschnitt 28 kann dann eine Bewegungsrichtung 18 aufweisen, die entgegengesetzt zu der Transportrichtung 17 ausgerichtet ist. Dadurch kann über einen verlängerten Zeitraum ein konstanter Winkel 33 zwischen der Lasereinrichtung 24 bzw. dem von dieser erzeugten Laserstrahl 26 und dem zu markierenden Oberflächenabschnitt 28 des Behälters 12 beibehalten werden, so dass eine vergleichsweise große und feine Markierung aufgebracht werden kann.

Eine Steuerung 20 kann mittels kabelloser oder kabelgebundener Signalverbindungen 22 sowohl mit der Antriebseinrichtung 42, beispielsweise über die Transporteinrichtung 14, als auch mit der Lasereinrichtung 24 verbunden sein. Damit können die Bewegungsabläufe so möglichst synchron gesteuert werden. Weitere, nicht näher beschriebene Bewegungen, wie ein Rückführen der entlang des Pfadabschnitts 19 mitgeführten Lasereinrichtung 24 bzw. des Laserstrahls 26 können ebenfalls von der Steuerung 20 gesteuert werden.

Es können weitere Lasereinrichtungen 24 vorgesehen sein, wobei jede Lasereinrichtung 24 einen anderen Behälter 12 markieren kann, der durch die Vorrichtung 10 transportiert wird. So können beispielsweise mit zwei Lasereinrichtungen 24 zwei aufeinanderfolgende Behälter 12 oder zwei Behälter 12 zwischen denen mindestens ein weiterer Behälter 12 angeordnet ist, markiert werden.

In den Figuren 1a bis 1c sind verschiedene Ausführungsbeispiele für eine Vorrichtung zur Lasercodierung 10 von Behältern 12 dargestellt.

Dabei ist gemäß Figur 1a eine Lasereinrichtung 24 derart beweglich an einer Halteeinrichtung 30 gelagert, dass sie in einer senkrecht auf der Transporteinrichtungsachse 16 angeordneten Ebene zwischen mindestens zwei Winkeleinstellungen geschwenkt werden kann. In einigen alternativen oder zusätzlichen Ausführungsbeispielen können andere Schwenkrichtungen außerhalb dieser Ebene denkbar sein.

Weiter kann die Lasereinrichtung 24 mittels einer weiteren Transporteinrichtung 34 mit dem zu markierenden Behälter 12 entlang einer wie in Figur 1a dargestellten geraden und/oder einer wie in Figur 1b dargestellten, der Führung der Transporteinrichtung 14 entsprechenden bogenförmigen Mitführrichtung 38 mitgeführt werden. Dies kann beispielsweise mittels eines Schienensystems 36 oder eines Greifarmsystems erfolgen. Sowohl das Schwenken 32 als auch das Mitführen 38 sowie weitere denkbare Bewegungen können die Positionierung des Laserstrahls 26 bei gleichbleibendem Winkel 33 zum zu markierenden Oberflächenabschnitt 28 des Behälters 12 verlängern und/oder verfeinern. Insbesondere eine leichte Lasereinrichtung 24, wie ein Diodenlaser, kann für ein beweglich gelagertes Ausführungsbeispiel der Lasereinrichtung 24 verwendet werden.

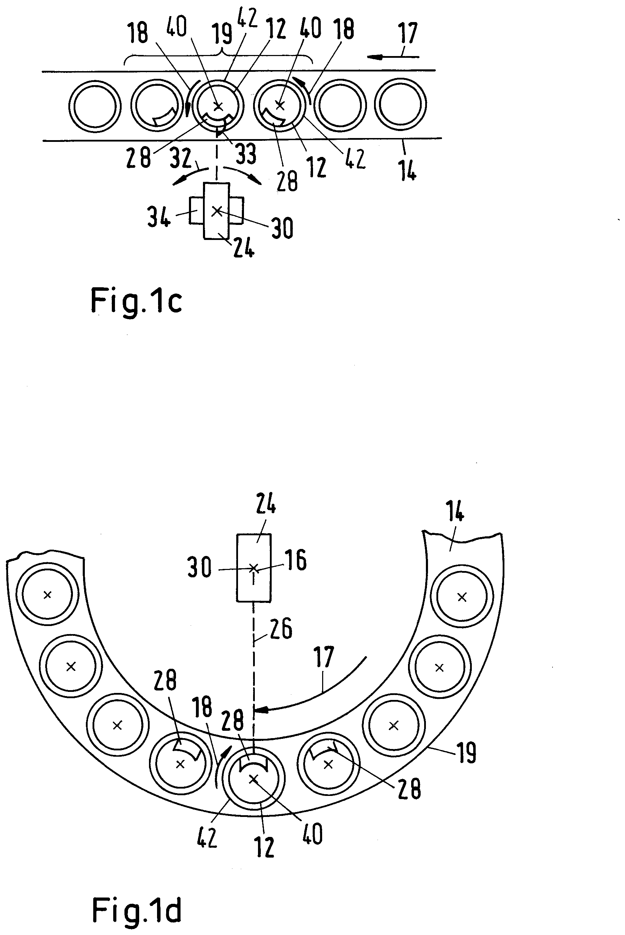

In Figur 1c ist ein Ausführungsbeispiel der Vorrichtung 10 dargestellt, bei der die Behälter 12 zumindest in dem Pfadabschnitt 19, der sich an der Lasereinrichtung 24 vorbei erstreckt, linear transportiert werden.

Die Antriebseinrichtung 42 kann die Behälter 12 in diesem Ausführungsbeispiel derart drehen, dass die Bewegungsrichtung 18 des Oberflächenabschnitts 28 entgegen der Transportrichtung 17 ausgerichtet ist, wenn die Behälter 12 entlang des Pfadabschnitts 19 transportiert werden. Weiter kann die Antriebseinrichtung 42 derart ausgebildet sein, dass die Oberflächenabschnitte 28 zumindest bei dem Transport entlang des Pfadabschnitts 19 ständig zu der Lasereinrichtung orientiert sind.

Weiter ist denkbar, dass die Lasereinrichtung 24 wie in Figur 1d dargestellt, schwenkbar an der Transporteinrichtungsachse 16 angeordnet sein kann. Dies hat den Vorteil, dass die Weglänge des Laserstrahls 26 sich beim Schwenken und beim Transport der Behälter 12 nicht verändert wird. In diesem Ausführungsbeispiel kann der Pfadabschnitt 19 dem Transportpfad der Behälter 12 entsprechen.

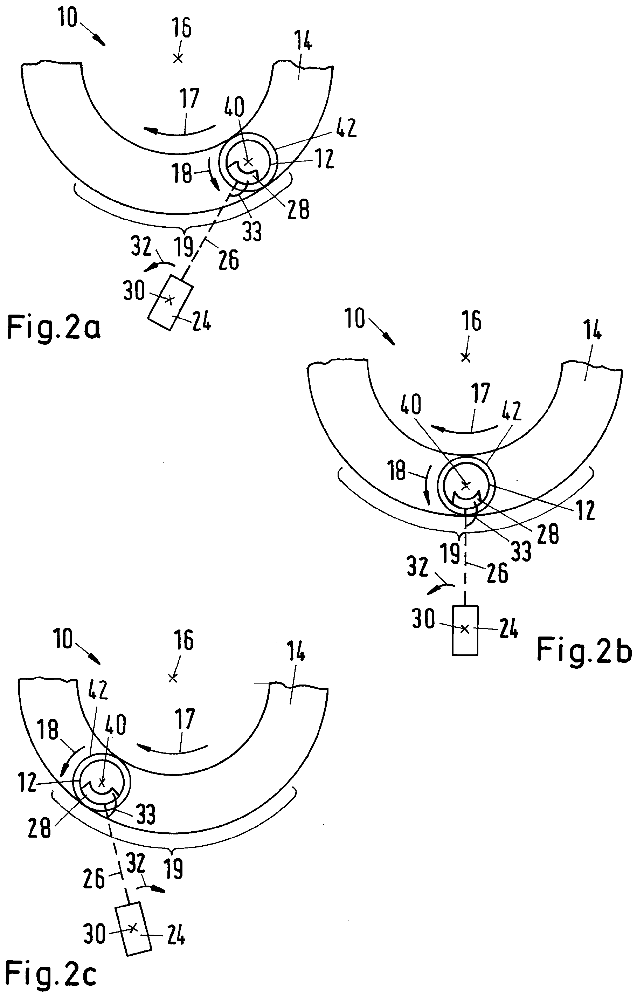

In den Figuren 2a-c ist, der Übersicht halber, schematisch die Markierung nur eines Behälters 12 mittels einer Lasereinrichtung 24 dargestellt. Es können jedoch auch weiter Behälter gleichzeitig mit dem dargestellten Behälter 12 entlang des Pfadabschnitts 19 transportiert werden. Die Markierung des Behälters 12 findet dabei von Figur 2a nach Figur 2c hin statt.

Ein Behälter 12 kann von der Transporteinrichtung 14 entlang des Transportpfads transportiert werden, wobei der Transportpfad vorzugsweise bogenförmig ausgebildet sein und somit eine Drehung des Behälters 12 durch den Transport entlang dieses bogenförmigen Transportpfads um die Transporteinrichtungsachse 16 erzeugt werden kann. Gleichzeitig kann der Behälter 12 mittels einer Antriebseinrichtung 42 derart um die eigene Behälterachse 40 in einer Bewegungsrichtung 18 gedreht werden, dass sich der Behälter 12 gegensinnig zur Drehung um die Transporteinrichtungsachse 16 dreht.

Der Transportpfad kann sich vorbei und/oder durch eine Maschine zur Lasercodierung 48, und somit an einer Lasereinrichtung 24 vorbei, erstrecken. Die Lasereinrichtung 24 kann, wie zuvor beschrieben, derart beweglich an der Halteeinrichtung 30 gelagert sein, dass sie in eine Schwenkrichtung 32 schwenkbar ist. So kann die Lasereinrichtung 24, wie in Figur 2a dargestellt, mit der Markierung beginnen, sobald der Behälter 12 in Reichweite des Laserstrahls 26 der Lasereinrichtung 24 kommt, auch wenn der Behälter 12 auf dem Abschnitt der Transporteinrichtung 14 noch nicht, wie in Figur 2b dargestellt, in kürzester Entfernung direkt vor der Lasereinrichtung 24 positioniert ist. Die Lasereinrichtung 24 und somit auch der Laserstrahl 26 können dann geschwenkt werden, um dem transportierten Behälter 12 zu folgen, wie im Ablauf der Figuren 2a bis 2c zu sehen ist. Das Schwenken der Lasereinrichtung 24 in die Schwenkrichtung 32 und das Drehen des Behälters 12 in die Bewegungsrichtung 18 können miteinander synchronisiert sein, sodass der Laserstrahl 26, solange wie durch die Laserreichweite und die Form des Transportpfads möglich ist, einen konstanten Winkel 33 zum zu markierenden Oberflächenabschnitt 28 halten kann. Dadurch ist eine großflächige Lasercodierung auch in Form eines gesamten Etiketts denkbar.

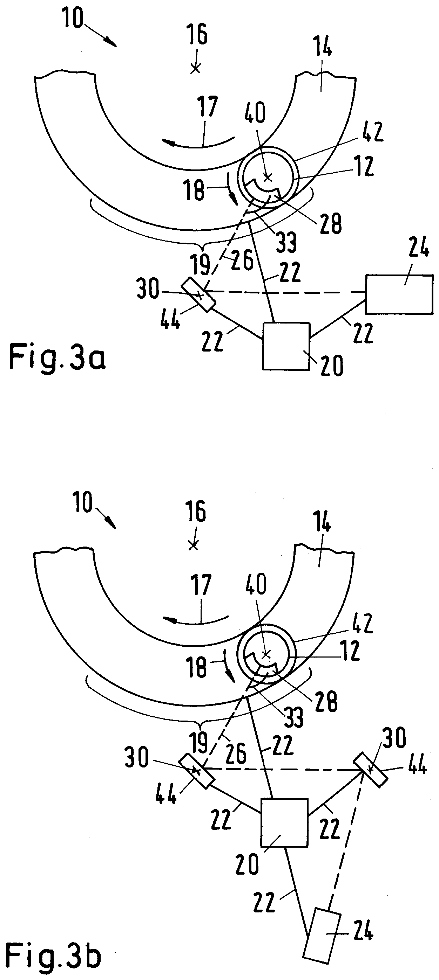

In den Figuren 3a und 3b sind schematische Darstellungen weiterer Ausführungsbeispiele der Vorrichtung zur Lasercodierung 10 von Behältern 12 dargestellt. In diesen Ausführungsbeispielen kann die Lasereinrichtung 24 stationär gelagert sein, wobei die Position innerhalb der Vorrichtung 10 variabel sein kann. So kann auch ein großer und/oder schwerer Laser, beispielsweise ein CO₂-Laser, verwendet werden. In Figur 3a kann ein von einer stationär gelagerten Lasereinrichtung 24 erzeugter Laserstrahl 26 von einem Spiegel 44 auf einen zu markierenden Behälter 12 umgelenkt werden. Dabei kann der Spiegel 44 derart beweglich an der Halteeinrichtung 30 gelagert sein, dass er horizontal und/oder vertikal oder in eine andere Schwenkrichtung 32 schwenkbar ausgebildet sein kann. Außerdem ist denkbar, dass der Spiegel 44, analog wie die beweglich gelagerte Lasereinrichtung 24 aus einer der Figuren 1a bis 1c, entlang eines Transportpfads mitführbar ausgebildet sein kann. Das Mitführen in die Mitführrichtung 38 kann über eine weitere Transporteinrichtung 34, beispielsweise ein Schienen- 36 und/oder Greifarmsystem, erfolgen und, analog wie die Drehung der Behälter um die Behälterachse 40 in die Bewegungsrichtung 18, über eine Steuerung 10 gesteuert werden.

In einem weiteren Ausführungsbeispiel mit zwei beweglich gelagerten Spiegeln 44, wie in Figur 3b dargestellt, kann ein Laserstrahl 26 von der Lasereinrichtung 24 erzeugt und über zwei Spiegel 44 zur Feinpositionierung umgelenkt werden. Beide Spiegel 44 können in der bereits beschriebenen Weise beweglich gelagert sein, sodass der Laserstrahl 26 mit gleichbleibendem Winkel 33 zum zu markierenden Oberflächenabschnitt 28 eines Behälters 12 mitgeführt werden und diesen überstreichen kann. Beide Spiegelsysteme können eine Halte-30 und/oder Transporteinrichtung 34 aufweisen und weiter über eine kabellose und/oder kabelgebundene Signalverbindung 22 mit der Steuerung 20 in Verbindung stehen. Die Steuerung 20 kann auch, zum Steuern des Rückführens des entlang des Pfadabschnitts 19 mitgeführten Spiegelsystems ausgebildet sein.

Denkbar sind weiter Ausführungen, bei denen mindestens ein Spiegel 44 gewölbt ist, oder mehr als zwei Spiegel 44 eingerichtet sind, wobei dann die Lasereinrichtung 24 in der Vorrichtung 10 entsprechend umpositioniert werden und mindestens eine weitere Signalverbindung 22 an der Steuerung 20 anliegen kann.

Wie in Figur 3b dargestellt, kann auch die Lasereinrichtung 24 derart ausgebildet sein, dass der Laserstahl 26 unter verschiedenen Winkeln um eine Schwenkachse 46 emittiert werden kann. Dies kann sowohl bei einer stationären Lasereinrichtung 24 als auch einer beweglichen Lasereinrichtung 24 eingerichtet sein.

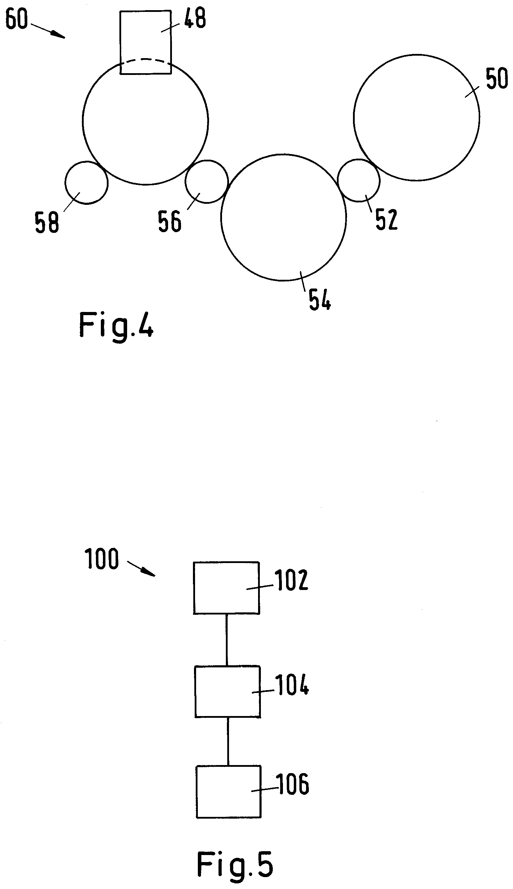

In Figur 4 ist eine Übersichtsdarstellung einer Anlage 60 zum Herstellen und/oder Behandeln von Behältern 12 dargestellt. Dabei kann die Anlage 60 mindestens eine Vorrichtung 10 gemäß der vorangegangenen Beschreibung aufweisen. Weiter kann optional eine Behälterherstellungsmaschine 50, in der beispielsweise Vorformlinge aus thermoplastischem Kunststoff zu Behältern 12 umgeformt werden können, eine Abfüllmaschine, eine Behälterrückführmaschine, eine Behältersortiermaschine und/oder sonstige Maschinen zur Behandlung von Behältern und/oder Vorformlingen vorgesehen sein.

Die Behälter 12 können entlang eines Transportpfads zu und von der Maschine zur Lasercodierung 48 transportiert werden. Der Transportpfad kann zumindest abschnittsweise durch eine Transportvorrichtung 52-58 gebildet sein und sich zumindest abschnittsweise durch die Maschine zur Lasercodierung 48 erstrecken. Mindestens eine Transportvorrichtung 52-58 kann beispielsweise drehbar als Karussell ausgebildet sein, an dem Halteelemente zum Haltern von Behältern 12 angebracht sein können. Es können aber auch Abschnitte des Transportpfads geradlinig ausgebildet sein.

Figur 5 zeigt ein Verfahren 100 zum Markieren mindestens eines zu markierenden Behälters 12. Das Markieren erfolgt beim Transport des Behälters 12 entlang eines Transportpfads.

Das Verfahren 100 kann mittels der Vorrichtung 10 gemäß den oben angeführten Erläuterungen durchgeführt werden.

Gemäß einem Schritt 102, kann mindestens ein Behälter 12 entlang zumindest dem mindestens einen Pfadabschnitt 19 des Transportpfads transportiert werden. Der Pfadabschnitt 19 erstreckt sich dabei an einer Lasereinrichtung 24 vorbei, die zum Erzeugen mindestens eines Laserstrahl 26 ausgebildet ist. Der Laserstrahl 26 ist dabei derart ausgerichtet, dass er den Transportpfad und damit den Pfadabschnitt 19 kreuzen kann.

In einem weiteren Schritt 104 wird der Behälter 12 während des Transports entlang des Pfadabschnitts 19 gedreht. Das Drehen kann mittels einer Antriebseinrichtung 42 erfolgen. Die Drehung erfolgt derart, dass ein Oberflächenabschnitt 28, der zur Lasereinrichtung 24 weist, entgegen der Transportrichtung 17 bewegt wird, in der der Behälter 12 entlang des Pfadabschnitts 19 bewegt wird.

Der Schritt 102 und der Schritt 104 können gleichzeitig durchgeführt werden.

Weiter kann während des Transports gemäß Schritt 102 der Behälter 12 mittels der mindestens einen Lasereinrichtung 24 markiert werden. Das Markieren erfolgt damit während des Transports der Behälter 12 durch den Pfadabschnitt 19.

Durch die Bewegungsrichtung 18 des Oberflächenabschnitts 28, die entgegen der Transportrichtung 17 gerichtet ist, kann der Oberflächenabschnitt 28 während des Transports des mindestens einen zu markierenden Behälters 12 im Pfadabschnitt 19 immer im gleichen Winkel zur Lasereinrichtung 24 ausgerichtet werden. Die Zeit, in der ein Laserstrahl 26 der Lasereinrichtung 24 dann auf den Oberflächenabschnitt 28 wirken kann, kann damit verlängert werden. Damit kann die Fläche der Markierung auf dem Behälter 12 vergrößert werden.

Auch der Schritt 106 kann gleichzeitig mit den Schritten 102 und/oder 104 durchgeführt werden.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zur Lasercodierung
- 12: Behälter
- 14: Transporteinrichtung
- 16: Transporteinrichtungsachse
- 17: Transportrichtung
- 18: Bewegungsrichtung
- 19: Pfadabschnitt
- 20: Steuerung
- 22: Signalleitung
- 24: Lasereinrichtung
- 26: Laserstrahl
- 28: Oberflächenabschnitt
- 30: Halteeinrichtung
- 32: Schwenkrichtung
- 33: Winkel
- 34: Transporteinrichtung
- 36: Schienensystem
- 38: Mitführrichtung
- 40: Behälterachse
- 42: Antriebseinrichtung
- 44: Spiegel
- 46: Schwenkachse
- 48: Maschine zur Lasercodierung
- 50: Behälterherstellungsmaschine
- 52: Transportvorrichtung
- 54: Transportvorrichtung
- 56: Transportvorrichtung
- 58: Transportvorrichtung
- 60: Anlage

## Patentansprüche

1. Vorrichtung (10) zum Markieren mindestens eines Behälters (12) bei einem Transport entlang mindestens eines Transportpfads, umfassend eine Transporteinrichtung (14) zum Transportieren des mindestens einen Behälters (12) entlang des Transportpfads in einer Transportrichtung (17), eine Antriebseinrichtung (42) zum Drehen des mindestens einen Behälters (12) um eine sich durch den mindestens einen Behälter (12) erstreckenden Behälterachse (40), und mindestens eine Lasereinrichtung (24) zum Erzeugen mindestens eines den Transportpfad kreuzenden Laserstrahls (26) zum Markieren des mindestens einen entlang des Transportpfads transportierten Behälters (12), **dadurch gekennzeichnet, dass** die Antriebseinrichtung (42) auf zumindest einem sich an der Lasereinrichtung (24) vorbei erstreckenden Pfadabschnitt (19) des Transportpfades derart zum Drehen des mindestens einen Behälters (12) um die Behälterachse (40) ausgebildet ist, dass mindestens ein zur Lasereinrichtung (24) weisender Oberflächenabschnitt (28) des mindestens einen Behälters (12) während des Transports des mindestens einen Behälters (12) entlang des Pfadabschnitts (19) eine Bewegungsrichtung (18) entgegen der Transportrichtung (17) aufweist.

2. Vorrichtung (10) nach Anspruch 1, **dadurch gekennzeichnet, dass** der Laserstahl (26) um eine Schwenkachse (46) schwenkbar ausgebildet ist, wobei sich der Laserstrahl (26) zu einem fest auf dem mindestens einen Behälter (12) angeordnetem Oberflächenpunkt erstreckt und während des Transports und der Drehung des mindestens einen Behälters (12) entlang des Pfadabschnitts (19) einen gleichbleibenden Winkel (33) mit mindestens einem den mindestens einen Oberflächenpunkt umgebenden Oberflächenabschnitt (28) des mindestens einen Behälters (12) einschließt.

3. Vorrichtung (10) nach Anspruch 1 oder 2, **dadurch gekennzeichnet, dass** die mindestens eine Lasereinrichtung (24) beweglich gelagert ist, wobei sie vorzugsweise zwischen einer ersten Winkelstellung und einer zweiten Winkelstellung schwenkbar ist, wobei zwischen den beiden Winkelstellungen ein von der Lasereinrichtung (24) erzeugter Laserstrahl (26) den zumindest einen Pfadabschnitt (19) überstreicht, und die Lasereinrichtung (24) insbesondere mindestens einen Diodenlaser aufweist.

4. Vorrichtung (10) nach Anspruch 1 oder 2, **dadurch gekennzeichnet, dass** die mindestens eine Lasereinrichtung (24) stationär gelagert ist.

5. Vorrichtung (10) nach Anspruch 4, **dadurch gekennzeichnet, dass** die Lasereinrichtung (24) mindestens einen beweglich gelagerten Spiegel (44) zum Umlenken des von der Lasereinrichtung (24) erzeugten Laserstrahls (26) in Richtung des mindestens einen Behälters (12) aufweist.

6. Vorrichtung (10) nach Anspruch 5, **dadurch gekennzeichnet, dass** der mindestens eine beweglich gelagerte Spiegel (44) schwenkbar gelagert ist.

7. Vorrichtung (10) nach einem der vorangegangenen Ansprüche, **dadurch gekennzeichnet, dass** die mindestens eine Lasereinrichtung (24) zum Auftragen mindestens einer Markierung in Form mindestens eines Etiketts auf den mindestens einen Behälter (12) ausgebildet ist.

8. Vorrichtung (10) nach einem der vorangegangenen Ansprüche, **dadurch gekennzeichnet, dass** der Transportpfad eine Bogenform, vorzugsweise eine Kreisbogenform, aufweist, wobei eine Drehrichtung des mindestens einen Behälters (12) um seine Behälterachse (40) gegensinnig zu einer durch einen Transport entlang der Bogenform des Transportpfads erzeugten Drehung des mindestens einen Behälters (12) um eine außerhalb des mindestens einen Behälters (12) angeordnete Drehachse ist.

9. Vorrichtung (10) nach einem der vorangegangenen Ansprüche, **dadurch gekennzeichnet, dass** die Vorrichtung eine Steuerung (20) für die Antriebseinrichtung (42) und die Lasereinrichtung (24) umfasst, die
- zum Steuern der Behälterdrehung entgegen der Transportrichtung (17) um ihre eigene Behälterachse (40) derart, dass der mindestens eine Oberflächenabschnitt (28) des mindestens einen Behälters (12) während des Transports des mindestens einen Behälters (12) entlang des Pfadabschnitts (19) eine gleichbleibende Orientierung zu der mindestens einen Lasereinrichtung (24) aufweist
und gleichzeitig
- zum Steuern der mindestens einen Lasereinrichtung (24) synchron zum Transport des mindestens einen Behälters (12)
eingerichtet ist.

10. Maschine zur Lasercodierung (48) mindestens eines Behälters (12) mindestens eine Vorrichtung (10) nach einem der vorangegangenen Ansprüche, wobei der Transportpfad sich durch die Maschine zur Lasercodierung (48) erstreckt, und ein Gehäuse, das die Maschine zur Lasercodierung (48) einhaust.

11. Anlage zum Herstellen und/oder Behandeln von Behältern, umfassend mindestens eine Maschine zum Herstellen und/oder Behandeln von Behältern (50), mindestens eine Vorrichtung nach einem der Ansprüche 1 bis 9 und mindestens einen Transportpfad für Behälter (12) und/oder eine Maschine zur Lasercodierung (48) nach Anspruch 10, wobei sich der Transportpfad zumindest zwischen der Maschine zum Herstellen und/oder Behandeln von Behältern (50) und der Vorrichtung (10) und/oder der mindestens einen Maschine zur Lasercodierung (48) erstreckt.

12. Verfahren (100) zum Markieren mindestens eines zu markierenden Behälters (12) bei einem Transport entlang mindestens eines Transportpfads, umfassend mindestens die folgenden Schritte:
- Transportieren (102) des mindestens einen Behälters (12) entlang zumindest einem Pfadabschnitt (19) des Transportpfads an einer Lasereinrichtung (24) zur Erzeugung mindestens eines den Transportpfad kreuzenden Laserstrahls (26) vorbei mittels einer Transporteinrichtung (14);
- Drehen (104) des mindestens einen Behälters (12) um die eigene Behälterachse (40) während des Transportierens entlang des zumindest einen Pfadabschnitts (19) mittels einer Antriebseinrichtung (42) derart, dass mindestens ein zur Lasereinrichtung (24) weisender Oberflächenabschnitt (28) des mindestens einen Behälters (12) während des Transports des mindestens einen Behälters (12) entlang des Pfadabschnitts (19) eine Bewegungsrichtung (18) entgegen der Transportrichtung (17) aufweist; und
- Markieren des mindestens einen Behälters (12) mittels der mindestens einen Lasereinrichtung (24) während des Transportierens entlang des zumindest einen Pfadabschnitts (19).
